**Europäisches Patentamt**

**European Patent Office**

**Office européen des brevets**

(11) Veröffentlichungsnummer: **0 392 347**
**A2**

## (12) EUROPÄISCHE PATENTANMELDUNG

(21) Anmeldenummer: **90106512.8**

(51) Int. Cl.5: **B29C 45/44, B29C 45/26**

(22) Anmeldetag: **05.04.90**

(30) Priorität: **12.04.89 DE 3912031**

(43) Veröffentlichungstag der Anmeldung:
**17.10.90 Patentblatt 90/42**

(84) Benannte Vertragsstaaten:
**DE ES FR GB IT**

(71) Anmelder: **THYSSEN POLYMER GMBH**
**Anzinger Strasse 1 Postfach 80 01 40**
**D-8000 München 80(DE)**

(72) Erfinder: **Neueder, Ludwig**
**Amselstrasse 9**
**D-8443 Furth/Bogen(DE)**

(54) **Spritzgusswerkzeug.**

(57) Mit der Erfindung wird ein Werkzeug und ein Verfahren zur Herstellung eines Spritzlings aus Kunststoff, insbesondere eines einteiligen geschlossenen Flügelrades oder dergl., vorgeschlagen, dessen Kernbereich in radial und axial-radial bewegliche Schieber und Riegel aufgeteilt ist, wobei der Folgeablauf diverser Werkzeugpartien für räumliche Hinterschneidungen und Verengungen des Spritzlings festgelegt ist, wodurch die Herstellung solcher komplizierter strömungsgünstiger, geschlossener Flügelräder mit räumlicher Hinterschneidung auf einfache Weise ohne Anwendung der s.g. Kernschmelztechnik möglich ist.

Fig. 1

EP 0 392 347 A2

# SPRITZGUßWERKZEUG

Die Erfindung bezieht sich auf ein Spritzgußwerkzeug zur Herstellung eines einteiligen, geschlossenen Flügelrades oder dergl. mit mindestens einer räumlichen Hinterschneidung.

Derartige Spritzgußwerkzeuge dienen zur Herstellung von Kunststoffspritzlingen, insbesondere solchen mit räumlichen Hinterschneidungen, wie Flügelrädern für Fluidpumpen oder dergl..

Geschlossene Flügelräder sind in der Herstellung aufwendig, da sie komplizierte Werkzeugkonstruktionen implizieren. Bekannt sind offene Flügelrädern und aus zwei Teilen zusammengesetzte geschlossene Flügelräder. Es sind auch einfach ge-schlossene Flügelräder bekannt, deren Schleuderk-anäle jedoch, werkzeugbedingt, strömungsungün-stig ausgebildet sind. Besonders die Entfernung eines solchen Spritzlings aus dem Spritzgußwerkzeug bereitet, wegen der räumlichen Hinterschneidungen, Schwierigkeiten.

Hier will die Erfindung Abhilfe schaffen.

Die Erfindung, wie sie in den Ansprüchen gekennzeichnet ist, löst die Aufgabe, ein Spritzgußwerkzeug für die Herstellung solcher geschlossener einteiliger Flügelräder mit räumlichen Hinterschneidungen in einem Spritzgußverfahren zu schaffen, das unter Vermeidung der aufwendigen Schmelzkerntechnik arbeitet.

Die durch die Erfindung erzielten Vorteile sind im wesentlichen darin zu sehen, daß in einem Arbeitsgang ein kompliziertes strömungsgünstiges, geschlossenes Flügelrad mit räumlichen Hinterschneidungen wirtschaftlich herstellbar ist.

Die Erfindung wird nachstehend anhand eines in den Abbildungen dargestellten Ausführungsbeispieles näher erläutert.

Es zeigt:

Fig. 1 einen Schnitt durch ein erfindungsgemäß vorgeschlagenes Werzeug und

Fig. 2 einen Schnitt durch Fig. 1 entlang der Linie C-C

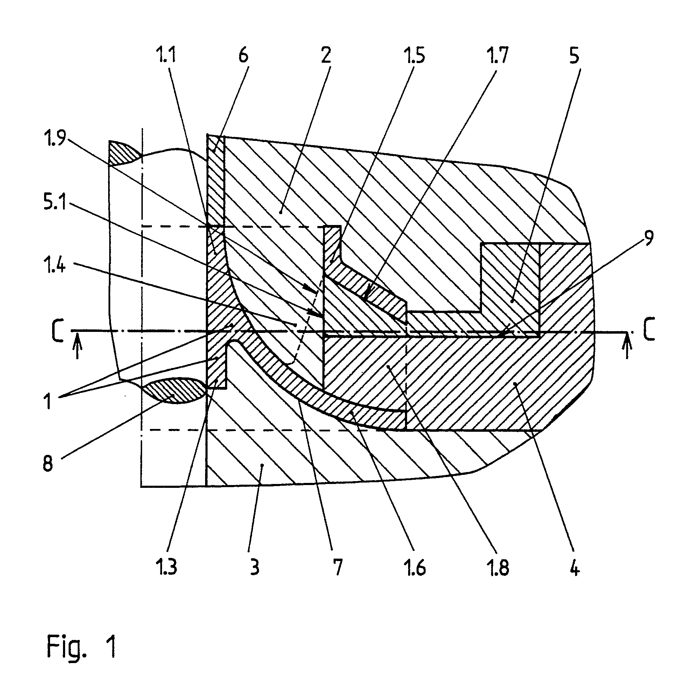

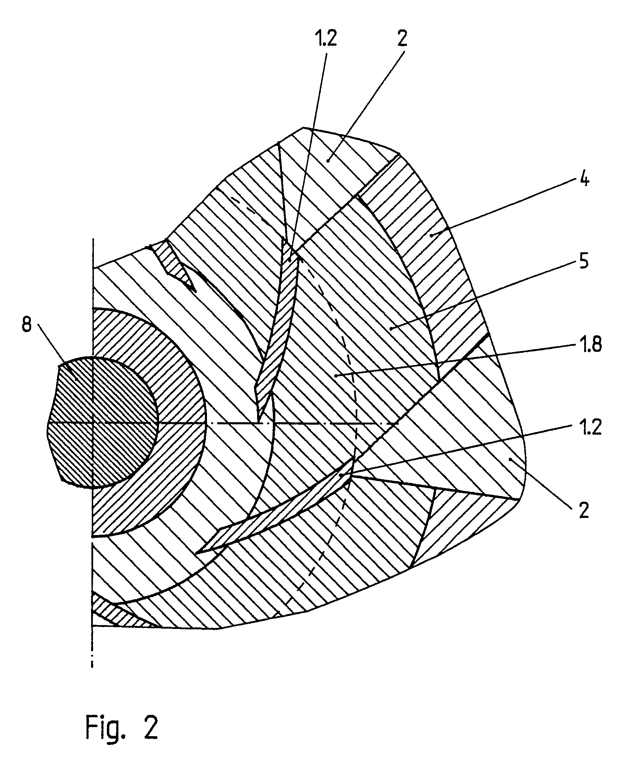

In den Figuren 1 und 2 ist der funktionelle Aufbau des Spritzgußwerkzeuges in geschlossenem befüllfertigem Zustand dargestellt.

In Figur 2 ist ein Teilabschnitt des Schnittes C-C dargestellt. Das Werkzeug besteht, wie üblich, aus zwei Formhälften mit je einer eingearbeiteten Kavität-Oberseite 2 und -Unterseite 3. Eine der beiden Formhälften, in gezeigtem Fall die Kavität-Oberseite 2, beinhaltet, zusätzlich je nach gewünschter Schaufelanzahl 1.2, mehrere Schieber 4 und Riegel 5. Die Kombination bildet im zusammengefahrenen Zustand - wie in Figur 1 und 2 dargestellt - den Freiraum (=Kavität) für das entstehende Flügelrad 1 und besteht aus Nabe 1.1, Flügel 1.2 umlaufendem Ring 1.5, trichterförmiger Rückwand 1.6. Daraus gebildeten Strömungskanal mit Ansaugbereich 1.4, der übergeht in den strömungs günstigen Schleuderkanal 1.8 mit entsprechendem Druckaufbau. Wie aus Figur 1 ersichtlich, entsteht aus Gründen eines optimalen strömungsgünstigen Schleuderkanals im Bereich Flügel 1.2 / Ring 1.5 / Rückwand 1.6 ein räumlicher Hinterschnitt, der ursächlich ist für die Nichtanwendung üblicher bekannter Werkzeugtechnologien und bisher durch die Auftrennung an der Schnittstelle 1.2 / 1.5 in zwei Teile oder die Anwendung der Kernschmelztechnik umgangen wird. Um trotz der Hinterschneidung 1.7 im Ringbreich und dem zusätzlich noch außen enger werdenden Schleuderkanal 1.8 nach dem Spritzgießvorgang entformen zu können, wird erfindungsgemäß der Kernbereich der für die Bildung dieser Strömungskanäle zuständigen Kerne aufgeteilt in Schieber 4 und Riegel 5, die sowohl radial als auch axial-radial bewegt werden.

Beispiele für die Bewegungsvorgänge der Werkzeuge nach dem Füllen des Werkzeuges:

Nach Öffnungsbeginn des Werkzeuges (= Auseinanderbewegen der Kavitätenoberseite 2 und Unterseite 3 entlang der Trennlinie 7 wird der Schieber 4 radial nach außen gezogen, so daß gleichzeitig für den Riegel 5 soviel Freiraum entsteht, daß er für eine Axialbewegung in Richtung vorige Lage des Schiebers 4 Platz und dadurch vom Hinterschnitt frei wird. Schieber 4 und Riegel 5 werden dann solange radial bzw. radial-axial nach außen bewegt, bis die innersten Kanten 5.1 des Riegels 5 außerhalb des größten Außendurchmessers des Flügelrades 1 liegen. Damit ist der gesamte formgebende Innenbereich des Flügelrades frei und das komplette Flügelrad 1 kann über einen Auswerfer 6, wie hier z.B. dargestellt, in Form einer ringförmigen Buchse von der Kavitätenoberseite 2 gestoßen werden. Aus spritz- und montagetechnischen Gründen wird die Nabe noch in den Ansatz 1.3 verlängert. Desweiteren kann man in diversen Bereichen des Flügelrades, z.B. im Bereich der Naben 1.1, noch, in den Abbildungen nicht dargestellt, zusätzliche Metallbuchsen oder ähnliche Verstärkungsteile zur besseren Haftung Flügelrad 1 / Antriebswelle 8 einsetzen. Die Trennebene 9 zwischen Schieber 4 und Riegel 5 kann auch eine Kurve oder sonstwie verlaufende, z.B. keilförmige Schräge, sein, so daß ein gleichzeitiger koordinierter Bewegungsablauf beider Elemente 4 und 5 gegeben ist.

Zum Zusammenfahren des leeren Werkzeuges vor einem Spritzvorgang kann der umgekehrte Bewegungsanlauf stattfinden. Sinnvollerweise fahren aber vor Zusammentreffen der beiden Kavitätenseiten die Schieber 4 und Riegel 5 in ihre formgebende Position und werden durch entsprechende bekannte, nicht dargestellte Elemente, innerhalb der Kavitäten gegen Verrutschen oder Verschieben durch den beim Spritzen entstehenden Forminnendruck gesichert.

Die Erfindung ist selbstverständlich nicht auf die Herstellung von geschlossenen Flügelrädern, wie in den Abbildungen dargestellt, beschränkt, sondern überall dort mit Vorteil einsetzbar wo ähnliche Probleme bei Spritzlingen mit räumlichen Hinterschneidungen zu lösen sind.

**Ansprüche**

1. Spritzgußwerkzeug zur Herstellung eines einteiligen geschlossenen Flügelrades oder dergl. mit mindestens einer räumlichen Hinterschneidung, **dadurch gekennzeichnet**, daß dessen Kernbereich in radial und axial-radial bewegliche Schieber (4) und Riegel (5) aufgeteilt ist.

2. Spritzgußwerkzeug nach Anspruch 1, **dadurch gekennzeichnet**, daß die Trennebene (5.1) sich innerhalb des Bereiches Innendurchmesser - umlaufender Ring (5) und Kante (1.2) des Flügels - zur Innenkontur des Flügels (1.9) befindet.

3. Spritzgußwerkzeug nach Anspruch 1 und 2, **dadurch gekennzeichnet**, daß die Trennebene (9) zwischen Schieber (4) und Riegel (5) eine Kurve ist.

4. Spritzgußwerkzeug nach Anspruch 1 und 2, **dadurch gekennzeichnet**, daß die Trennebene (9) als keilförmige Schräge ausgebildet ist.

5. Spritzgußwerkzeug nach Anspruch 1 und 2, **dadurch gekennzeichnet**, daß die Trennebene (9) geradlinig verläuft.

6. Verfahren zur Herstellung eines geschlossenen Spritzlings, vorzugsweise eines Flügelrades, mit mindestens einer Hinterschneidung, mittels eines Spritzgußwerkzeuges gemäß Anspruch 1 bis 5, **dadurch gekennzeichnet**, daß nach Öffnen des Spritzgußwerkzeuges entlang seiner Trennlinie (7) zunächst der Schieber (4) radial nach außen gezogen wird, anschließend der Riegel (5) zunächst eine Axialbewegung in Richtung auf die ursprüngliche Lage des Schiebers (4) durchführt und danach der Schieber (4) und der Riegel (5) solange radial und/oder radial-axial nach außen bewegt werden, bis die innersten Kanten (5.1) des Riegels (5) außerhalb des Außendurchmessers des Spritzlings (1) liegen.

Fig. 1

Fig. 2